# EUROPÄISCHE PATENTSCHRIFT

(11) **EP 1 106 974 B1**
(45) Veröffentlichungstag und Bekanntmachung des Hinweises auf die Patenterteilung: **24.03.2004**
(21) Anmeldenummer: 00124588.5
(22) Anmeldetag: 10.11.2000
(51) Int. Cl.: G01F 1/58

(54) **Magnetisch-induktives Durchflussmessgerät**
Magnetic inductive flowmeter
Débitmètre magnéto-inductif

(30) Priorität: 03.12.1999 DE 19958285
(43) Veröffentlichungstag der Anmeldung: 13.06.2001
(73) Patentinhaber: Krohne AG, 4019 Basel (CH)
(72) Erfinder: Leendert van Willigen, Arnould, 3011 DJ, Rotterdam (NL)
(74) Vertreter: Gesthuysen, von Rohr & Eggert

(56) Entgegenhaltungen:
- WO-A-93/03332
- DE-A- 2 831 570
- DE-A- 3 501 768
- US-A- 5 751 535

## Beschreibung

Die Erfindung betrifft ein magnetisch-induktives Durchflußmeßgerät für strömende Medien, mit einem Meßrohr, zwei von außen an das Meßrohr angesetzten Magnetpolen und zwei miteinander verbundenen Rückführungsblechen, wobei die Magnetpole jeweils eine Magnetspule und einen diese tragenden Polschuh aus Blech aufweisen, die Polschuhe jeweils im Öffnungsbereich der den jeweiligen Polschuh tragenden Magnetspule mit einem Rückführungsblech verbunden sind, außerhalb des Öffnungsbereichs der den jeweiligen Polschuh tragenden Magnetspule und an diesen anschließend an dem Meßrohr anliegende Abschnitte aufweisen, und jeweils in dem Öffnungsbereich der den jeweiligen Polschuh tragenden Magnetspule im Abstand vom Meßrohr angeordnet sind, indem die Polschuhe in dem Öffnungsbereich der den jeweiligen Polschuh tragenden Magnetspule in die Öffnung der Magnetspule hineinragende und sich bis zu dem dem Meßrohr abgewandten Ende des Öffnungsbereichs der den jeweiligen Polschuh tragenden Magnetspule erstreckende Abschnitte aufweisen.

Das grundlegende Prinzip eines magnetisch-induktiven Durchflußmeßgeräts für strömende Medien geht bereits auf Faraday zurück, der im Jahre 1832 vorgeschlagen hat, das Prinzip der elektrodynamischen Induktion zur Strömungsgeschwindigkeitsmessung anzuwenden. Nach dem Faradayschen Induktionsgesetz entsteht in einem strömenden Medium, welches Ladungsträger mit sich führt und durch ein Magnetfeld hindurchfließt, eine elektrische Feldstärke senkrecht zur Strömungsrichtung und senkrecht zum Magnetfeld. Dieses Gesetz wird bei einem magnetisch-induktiven Durchflußmeßgerät dadurch genutzt, daß ein Magnet, regelmäßig bestehend aus zwei Magnetpolen mit je einer Magnetspule, ein Magnetfeld senkrecht zur Strömungsrichtung in dem Meßrohr erzeugt. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung. Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist die Proportionalität zwischen der Meßspannung und der über den Querschnitt des Rohrs gemittelten Strömungsgeschwindigkeit des Mediums, d. h. zwischen Meßspannung und Volumenstrom.

Bei einem aus der DE 35 01 768 C2 bekannten magnetisch-induktiven Durchflußmeßgerät sind einander gegenüberliegende Polschuhe vorgesehen, die jeweils im wesentlichen vollständig am Meßrohr anliegen. Auf diesen Polschuhen ist jeweils eine sattelförmige Magnetspule vorgesehen, in deren Öffnung ein bis zum Polschuh reichender und auf diesem aufliegender Kernabschnitt hineinragt. Diese Kernabschnitte werden von Blechabschnitten gebildet, die einstückig mit die gesamte Anordnung, d. h. das Meßrohr, die Polschuhe und die Magnetspulen, umschließenden Rückführungsblechen verbunden sind. Auf diese Weise wird ein kompaktes magnetisch-induktives Durchflußmeßgerät erzielt, mit dem ein konstantes und ausreichendes Magnetfeld für die magnetisch-induktive Durchflußmessung erreichbar ist, da zwischen Polschuh und Rohrumfang sowie im Bereich der Kernabschnitte praktisch keine den magnetischen Fluß beeinträchtigende Luftspalte auftreten.

Jedoch weist die aus dem Stand der Technik bekannte Anordnung eine Mehrzahl von Nachteilen auf. So ist z. B. die Herstellung dies herkömmlichen magnetisch-induktiven Durchflußmeßgerätes insofern aufwendig, als daß die Magnetspulen beim Zusammenbau der einzelnen Komponenten des magnetisch-induktiven Durchflußmeßgerätes auf die vollständig an dem Meßrohr anliegenden Polschuhe aufgebracht werden müssen, die somit keine Möglichkeit einer lokalen Fixierung der Magnetspule ermöglichen. Darüber hinaus erfolgt die Befestigung der mit den Rückführungsblechen einstückig ausgebildeten Kernabschnitte an dem Polschuh in einer Vertiefung der Rückführungsbleche, so daß die die Größe dieser Vertiefung bestimmende Öffnung der jeweiligen Magnetspule einen gewissen Durchmesser nicht unterschreiten darf, damit der Boden dieser Vertiefung für ein Befestigungswerkzeug, z. B. zum Punktverschweißen oder Annieten, zugänglich bleibt. Auf diese Weise ist darüber hinaus auch die Anzahl der Windungen der Magnetspule stark beschränkt, da die Magnetspule aufgrund dieser Befestigungsproblematik keinen beliebig geringen Durchmesser aufweisen kann.

Eine gewisse Verbesserung wird durch ein aus der US 5,751,535 bekanntes magnetisch-induktives Durchflußmeßgerät erreicht. Dort ist ein magnetisch-induktives Durchflußmeßgerät der eingangs genannten Art beschrieben, bei dem auch sehr kleine Durchmesser der Magnetspule realisierbar sind. Da eine Magnetspule mit geringerem Innendurchmesser eine größere Anzahl von Windungen aufweisen kann, ist damit auch ein größeres Magnetfeld erzielbar.

Dementsprechend ist es die Aufgabe der Erfindung, ein solches magnetisch-induktives Durchflußmeßgerät anzugeben, daß eine bessere Homogenität des erzeugten Magnetfelds sowie ein besseres Signal-zu-Rausch-Verhältnis aufweist.

Ausgehend von dem eingangs beschriebenen magnetisch-induktiven Durchflußmeßgerät ist die zuvor hergeleitete und aufgezeigte Aufgabe durch die Merkmale des Anspruchs 1 gelöst. Polschuhe weisen jeweils außerhalb des Öffnungsbereichs der Magnetspule, an ihre an dem Meßrohr anliegende Abschnitte anschließend, jeweils einen abgewinkelten und von dem Meßrohr abstehenden Abschnitt auf und die abgewinkelten und von dem Meßrohr abstehenden Abschnitte der einander gegenüberliegenden Polschuhe verlaufen parallel zueinander.

Durch die abgewinkelten und von dem Meßrohr abstehenden Abschnitte werden die Magnetspulen nämlich unterstützt und somit stabilisiert, was die Positionierung der Magnetspulen beim Zusammensetzen des magnetisch-induktiven Durchflußmeßgeräts erheblich erleichtert. Außerdem sind die abgewinkelten und von dem Meßrohr abstehenden Abschnitte maßgeblich für die Richtung, die dem Magnetfeld in der Nähe der Elektroden gegeben wird. Da die abgewinkelten und von dem Meßrohr abstehenden Abschnitte der einander gegenüberliegenden Polschuhe parallel zueinander verlaufen, kann eine besonders gute Homogenität des von den Magnetspulen erzeugten Magnetfelds über einen sehr großen und im wesentlichen den gesamten Querschnitt des Meßrohrs erfassenden Bereich erzielt werden. Schließlich wird durch die abgewinkelten und von dem Meßrohr abstehenden Abschnitte erreicht, daß die Elektroden und somit die von den Elektroden abgenommene Meßspannung elektrisch von dem Spulensignal abgeschirmt werden. Dies führt zu einer zusätzlichen Verbesserung des Signal-zu-Rausch-Verhältnisses der abgenommenen Meßspannung des erfindungsgemäßen magnetisch-induktiven Durchflußmeßgeräts

Eine bevorzugte Weiterbildung des erfindungsgemäßen magnetisch-induktiven Durchflußmeßgeräts besteht darin, daß die Polschuhe jeweils an dem dem Meßrohr abgewandten Ende der Öffnung der den jeweiligen Polschuh tragenden Magnetspule einen Polschuhabschnitt aufweisen, der die in die Öffnung der Magnetspule hineinragenden und sich bis zu dem dem Meßrohr abgewandte Ende des Öffnungsbereichs der den jeweilige Polschuh tragenden Magnetspule erstreckende Abschnitte des Polschuhs miteinander verbindet. Auf diese Weise kann der Polschuh einstückig ausgebildet werden, was seine Stabilität wesentlich erhöht. Darüber hinaus ist auf diese Weise eine flächige Auflage der Rückführungsbleche auf dem Polschuhabschnitt möglich, was die Verbindung der Rückführungsbleche mit dem Polschuh deutlich erleichtert.

Eine bevorzugte Weiterbildung der Erfindung besteht ferner darin, daß die Magnetspule sattelförmig ausgebildet ist. Insbesondere kann die Magnetspule auf diese Weise genau an die Krümmung des auf dem Meßrohr anliegenden Polschuhs angepaßt sein.

Um dem erfindungsgemäßen magnetisch-induktiven Durchflußmeßgeräts bestimmte anwendungsspezifische Eigenschaften zu verleihen, ist gemäß einer bevorzugten Weiterbildung der Erfindung vorgesehen, daß die Polschuhe und die Rückführungsbleche aus voneinander verschiedenen magnetisierbaren Materialien bestehen.

Schließlich besteht eine bevorzugte Weiterbildung des erfindungsgemäßen magnetisch-induktiven Durchflußmeßgeräts darin, daß die Rückführungsbleche die Magnetpole und das Meßrohr peripher umgeben.

Im einzelnen gibt es nun eine Vielzahl von Möglichkeiten, das erfindungsgemäße magnetisch-induktive Durchflußmeßgerät auszugestalten und weiterzubilden. Dazu wird einerseits auf die dem Patentanspruch 1 nachgeordneten Patentansprüche und andererseits auf die folgende detaillierte Beschreibung bevorzugter Ausführungsbeispiele der Erfindung unter Bezugnahme auf die Zeichnung verwiesen. In der Zeichnung zeigt
- Fig. 1: im Schnitt und schematisch, ein magnetisch-induktives Durchflußmeßgerät gemäß einem ersten bevorzugten Ausführungsbeispiel,
- Fig. 2: im Schnitt und schematisch, ein magnetisch-induktives Durchflußmeßgerät gemäß einem zweiten bevorzugten Ausführungsbeispiel und
- Fig. 3: wiederum im Schnitt und schematisch, ein magnetisch-induktives Durchflußmeßgerät gemäß einem dritten bevorzugten Ausführungsbeispiel.

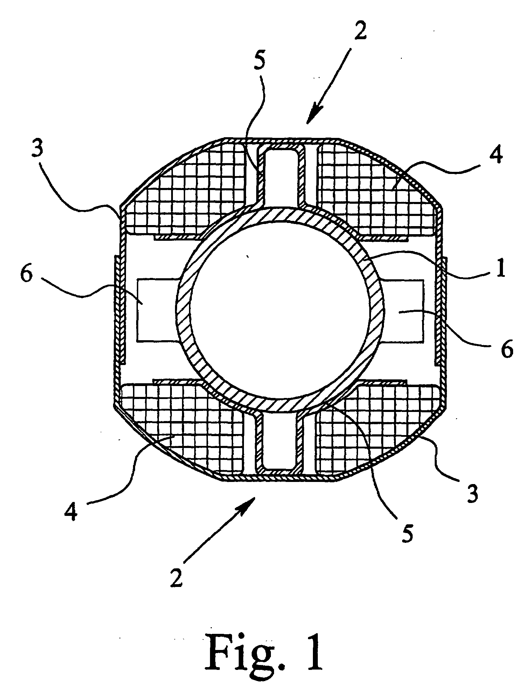

Aus Fig. 1 ist schematisch im Schnitt ein magnetisch-induktives Durchflußmeßgerät gemäß einem ersten bevorzugten Ausführungsbeispiel ersichtlich. Dabei sind an ein Meßrohr 1, in dem das strömende Medium geführt wird, dessen Durchfluß gemessen werden soll, von außen und einander gegenüberliegend zwei Magnetpole 2 angesetzt. Eingeschlossen und somit vollständig umgeben ist diese Anordnung aus Meßrohr 1 und Magnetpolen 2 von zwei Rückführungsblechen 3, die jeweils von einer einem Magnetpol 2 entsprechenden Seite auf die Anordnung aufgeschoben sind, seitlich einander überlappen und dort miteinander verbunden sind. Zur Verbindung der beiden Rückführungsbleche 3 miteinander kann schon eine Klemmverbindung genügen; es ist jedoch bevorzugt, wenn die Rückführungsbleche 3 miteinander verschweißt - vorzugsweise punktverschweißt - oder miteinander vernietet sind. Die Dicke der Rückführungsbleche beträgt typischerweise etwa 1 mm.

Die Magnetpole 2 weisen jeweils eine Magnetspule 4 sowie einen Polschuh 5 auf. Die Polschuhe 5 sind ebenfalls aus Blech mit einer Dicke von typischerweise 1 mm hergestellt und weisen jeweils Abschnitte auf, die fest am Meßrohr 1 anliegen und somit eine dessen Außenumfang entsprechende Krümmung aufweisen. In dem dem Öffnungsbereich der Magnetspule 4 entsprechenden Bereich ist jedoch vorgesehen, daß die Polschuhe 5 im Abstand vom Meßrohr 1 angeordnet sind. Wie aus Fig. 1 ersichtlich, weisen die Polschuhe 5 dazu in die Öffnungen der Magnetspulen 4 hineinragende Abschnitte auf, die bis zu dem dem Meßrohr 1 abgewandten Ende der Öffnung der Magnetspule 4 reichen und dort in einen diese Abschnitte miteinander verbindenden Polschuhabschnitt übergehen. Dieser im wesentlichen tangential zum Meßrohr 1 verlaufende Polschuhabschnitt dient gemäß dem ersten bevorzugten Ausführungsbeispiel zur Befestigung des Polschuhs 5 an dem jeweils zugeordneten Rückführungsblech 3.

Wie ferner aus Fig. 1 ersichtlich ist, ist der Bereich, in dem das Rückführungsblech 3 mit dem Polschuh 5 zu verbinden ist, vollkommen frei zugänglich, so daß insofern keine Einschränkungen bezüglich der Abmessungen bzw. der Form eines für die Befestigung verwendeten Befestigungswerkzeugs, wie z. B. eine Nietvorrichtung oder ein Punktschweißgerät, vorliegen. Gemäß dem ersten bevorzugten Ausführungsbeispiel der Erfindung sind mit dem strömenden Medium kapazitiv gekoppelte Elektroden 6 vorgesehen. Zu diesen Elektroden 6 hin weisen die Polschuhe 5, an ihre an dem Meßrohr 1 anliegenden Bereiche anschließend, abgewinkelte und von dem Meßrohr 1 abstehende Abschnitte auf. Aus Fig. 1 ist gut zu erkennen, daß durch die hervorstehenden Abschnitte der Polschuhe 5 in der Öffnung der Magnetspule 4 einerseits und die abgewinkelten und von dem Meßrohr 1 abstehenden Abschnitte andererseits eine genau, präzise und verläßliche Positionierung und Ausrichtung der Magnetspulen 4 möglich ist, was den Zusammenbau der verschiedenen Komponenten des magnetisch-induktiven Durchflußmeßgeräts gemäß dem ersten bevorzugten Ausführungsbeispiel der Erfindung wesentlich erleichtert. Die abgewinkelten und von dem Meßrohr 1 abstehenden Abschnitte der einander gegenüberliegenden Polschuhe 5 verlaufen parallel zueinander. Dies führt insbesondere dazu, daß die Homogenität des von den beiden einander gegenüberliegenden Magnetpolen 2 erzeugten Magnetfelds auch im Außenbereich und somit im gesamten Querschnittsbereich des Meßrohrs 1 besonders gut ist. Darüber hinaus wird durch die abgewinkelten und von dem Meßrohr 1 abstehenden Abschnitte eine elektrische Abschirmung des Spulensignals von der von den Elektroden 6 abgenommenen Meßspannung bewirkt, was ein verbessertes Signal-zu-Rausch-Verhältis zur Folge hat.

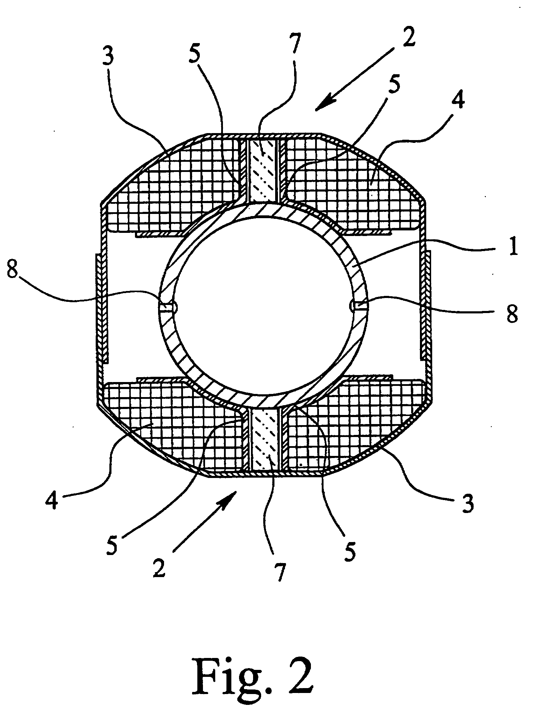

Aus Fig. 2 ist im Schnitt schematisch ein magnetisch-induktives Durchflußmeßgerät gemäß einem zweiten bevorzugten Ausführungsbeispiel der Erfindung ersichtlich. Im Gegensatz zu dem in Fig. 1 gezeigten ersten bevorzugten Ausführungsbeispiel der Erfindung weist das magnetisch-induktive Durchflußmeßgerät gemäß dem zweiten bevorzugten Ausführungsbeispiel der Erfindung keinen Polschuhabschnitt auf, der die in die Öffnung der Magnetspule 4 hineinragenden Abschnitte eines jeweiligen Polschuhs 5 miteinander verbindet. Statt dessen ist ein quaderförmiger Abstandshalter 7 aus einem nicht magnetisierbaren Material vorgesehen. In diesem Fall erfolgt die Befestigung des Polschuhs 5 an dem Rückführungsblech 3 durch Punktschweißen, da für eine Vernietung keine ausreichend große Fläche vorhanden ist.

Aus Fig. 2 ist ferner ersichtlich, daß im Gegensatz zu dem in Fig. 1 gezeigten ersten bevorzugten Ausführungsbeispiel der Erfindung, bei dem die in die Öffnung der Magnetspule 4 hineinragenden Abschnitte des Polschuhs 5 im Abstand von der Magnetspule 4 angeordnet sind, die Magnetspule 4 auch direkt bis an die in die Öffnung der Magnetspule 4 hineinragenden Abschnitte heranreichen kann. Auf diese Weise wird der für die Magnetspule 4 verfügbare Platz voll ausgenutzt, so daß eine maximale Anzahl von Windungen vorgesehen werden kann. Schließlich ist in Fig. 2 schematisch angedeutet, daß anstatt von kapazitiv mit dem im Meßrohr 1 strömenden Medium gekoppelten Elektroden auch galvanisch mit dem strömenden Medium gekoppelte Elektroden 8 einsetzbar sind.

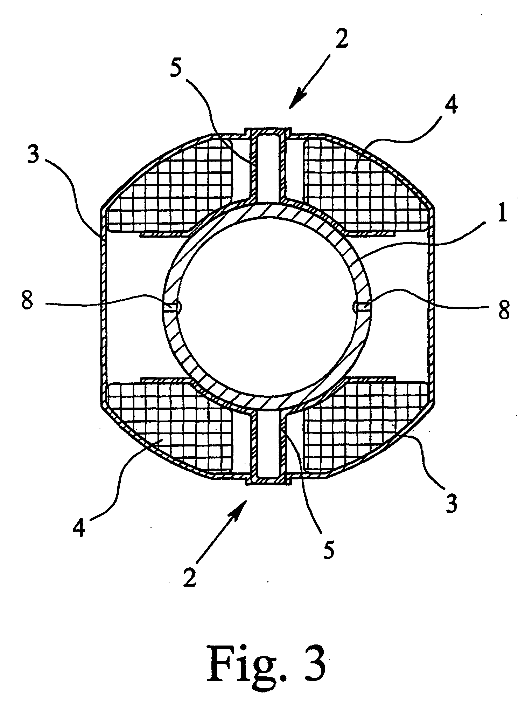

Aus Fig. 3 ist schließlich im Schnitt schematisch ein magnetisch-induktives Durchflußmeßgerät gemäß einem dritten bevorzugten Ausführungsbeispiel der Erfindung ersichtlich. Bei diesem Ausführungsbeispiel ist insbesondere vorgesehen, daß die Rückführungsbleche 3 nicht von den den beiden einander gegenüberliegenden Magnetpolen 2 entsprechenden Seiten aufgeschoben werden, sondern dazu um 90° versetzt. Die Rückführungsbleche 3 treffen somit mit ihren jeweiligen Enden auf die in die Öffnung der Magnetspule 4 hineinragenden Abschnitte der Polschuhe 5, wo diese mit den Polschuhen 5 punktverschweißt werden. Je nach vorliegender Installationsgeometrie kann eine solche Anordnung der Rückführungsbleche 3 vorteilhaft sein.

## Patentansprüche

1. Magnetisch-induktives Durchflußmeßgerät für strömende Medien, mit einem Meßrohr (1), zwei von außen an das Meßrohr (1) angesetzten Magnetpolen (2) und zwei miteinander verbundenen Rückführungsblechen (3), wobei die Magnetpole (2) jeweils eine Magnetspule (4) und einen diese tragenden Polschuh (5) aus Blech aufweisen, die Polschuhe (5) jeweils im Öffnungsbereich der den jeweiligen Polschuh (5) tragenden Magnetspule (4) mit einem Rückführungsblech (3) verbunden sind, außerhalb des Öffnungsbereichs der den jeweiligen Polschuh (5) tragenden Magnetspule (4) und an diesen anschließend an dem Meßrohr (1) anliegende Abschnitte aufweisen und jeweils in dem Öffnungsbereich der den jeweiligen Polschuh (5) tragenden Magnetspule (4) im Abstand vom Meßrohr (1) angeordnet sind, indem die Polschuhe (5) in dem Öffnungsbereich der den jeweiligen Polschuh (5) tragenden Magnetspule (4) in die Öffnung der Magnetspule (4) hineinragende und sich bis zu dem dem Meßrohr (1) abgewandten Ende des Öffnungsbereichs der den jeweiligen Polschuh (5) tragenden Magnetspule (4) erstreckende Abschnitte aufweisen, **dadurch gekennzeichnet, daß** die Polschuhe (5) jeweils außerhalb des Öffnungsbereichs der Magnetspule (4), an ihre an dem Meßrohr (1) anliegende Abschnitte anschließend, jeweils einen abgewinkelten und von dem Meßrohr (1) abstehenden Abschnitt aufweisen und die abgewinkelten und von dem Meßrohr (1) abstehenden Abschnitte der einander gegenüberliegenden Polschuhe (5) parallel zueinander verlaufen.

2. Magnetisch-induktives Durchflußmeßgerät nach Anspruch 1, **dadurch gekennzeichnet, daß** die Polschuhe (5) jeweils an dem dem Meßrohr (1) abgewandten Ende der Öffnung der den jeweiligen Polschuh (5) tragenden Magnetspule (4) einen Polschuhabschnitt aufweisen, der die in die Öffnung der Magnetspule (4) hineinragenden und sich bis zu dem Meßrohr (1) abgewandten Ende des Öffnungsbereichs der den jeweiligen Polschuh (5) tragenden Magnetspule (4) erstreckenden Abschnitte miteinander verbindet.

3. Magnetisch-induktives Durchflußmeßgerät nach Anspruch 1 oder 2, **dadurch gekennzeichnet, daß** die Magnetspule (4) sattelförmig ausgebildet ist, insbesondere genau an die Krümmung des auf dem Meßrohr (1) anliegenden Polschuhs (5) angepaßt ist.

4. Magnetisch-induktives Durchflußmeßgerät nach einem der Ansprüche 1 bis 3, **dadurch gekennzeichnet, daß** die Polschuhe (5) und die Rückführungsbleche (3) aus voneinander verschiedenen magnetisierbaren Materialien bestehen.

5. Magnetisch-induktives Durchflußmeßgerät nach einem der Ansprüche 1 bis 4 **dadurch gekennzeichnet, daß** die Rückführungsbleche (3) die Magnetpole (2) und das Meßrohr (1) peripher umgeben.

## Claims

1. Electromagnetic flow meter for flowing media having a measuring tube (1), two magnetic poles (2) attached externally to the measuring tube (1) and two interlinked return sheets (3), wherein each of the magnetic poles (2) has a pole shoe (5) of sheet metal bearing a solenoid coil (4), the pole shoes (5) being connected to a return sheet (3) in the opening area of the solenoid coil (4) supported by the pole shoe (5) and adjacent thereto having a segment fitted to the measuring tube (1) and in each case being arranged with clearance from the measuring tube (1) in the opening area of the respective solenoid coil (4) supported by the pole shoe (5), in which the pole shoes (5) have segments in the opening area of the solenoid coils (4) supported by the pole shoes (5) jutting into the opening of the solenoid coil (4) and extending to the end not facing the measuring tube (1) of the opening area of the magnetic coil (4) supported by the pole shoe (5), **characterized in that** the pole shoes (5) each have a bent segment with clearance from the measuring tube (1) outside of the opening area of the solenoid coil (4) adjacent to the segment fitted to its measuring tube (1) and the bent segments with clearance from the measuring tube (1) of the diagonally arranged pole shoes (5) run parallel to one another.

2. Electromagnetic flow meter according to claim 1, **characterized in that** the pole shoes (5) each have a pole shoe segment at the end of the opening facing away from the measuring tube (1) of the solenoid coil (4) supported by the pole shoe (5) that connects the segments jutting into the opening of the solenoid coil (4) and extending to the end not facing the measuring tube (1) of the opening area of the magnetic coil (4) supported by the pole shoe (5).

3. Electromagnetic flow meter according to claim 1 or 2, **characterized in that** the solenoid coil (4) is formed in the shape of a saddle, in particular is exactly fitted to the curve of the pole shoe (5) adjacent to the measuring tube (1).

4. Electromagnetic flow meter according to any one of claims 1 to 3, **characterized in that** the pole shoes (5) and the return sheets (3) consist of materials that can be magnetized differently from one another.

5. Electromagnetic flow meter according to any one of claims 1 to 4, **characterized in that** the return sheets (3) form a periphery around the magnetic poles (2) and the measuring tube (1).

## Revendications

1. Débitmètre magnéto-inductif pour des milieux qui s'écoulent, comprenant un tube de mesure (1), deux pôles magnétiques (2) venant se disposer depuis l'extérieur contre le tube de mesure (1) et deux tôles de remise en circulation (3) reliées l'une à l'autre, les pôles magnétiques (2) présentant respectivement une bobine magnétique (4) et une pièce polaire en tôle (5) portant cette dernière, les pièces polaires (5), respectivement dans la zone d'ouverture de la bobine magnétique (4) portant la pièce polaire respective (5), étant reliées à une tôle de remise en circulation (3), présentant, à l'extérieur de la zone d'ouverture de la bobine magnétique (4) portant la pièce polaire respective (5), des sections venant se raccorder à cette dernière en position adjacente contre le tube de mesure (1) et étant disposées, respectivement dans la zone d'ouverture de la bobine magnétique (4) portant la pièce polaire respective (5), à l'écart du tube de mesure (1), dans lequel, les pièces polaires (5), dans la zone d'ouverture de la bobine magnétique (4) portant la pièce polaire respective (5), présentent des sections se détournant du tube de mesure (1) qui pénètrent dans l'ouverture de la bobine magnétique (4) et qui s'étendant jusqu'à l'extrémité de la zone d'ouverture de la bobine magnétique (4) portant la pièce polaire respective (5), **caractérisé en ce que** les pièces polaires (5) présentent respectivement, à l'extérieur de la zone d'ouverture de la bobine magnétique (4), respectivement une section coudée et une section s'écartant du tube de mesure (1), se raccordant à leurs sections adjacentes au tube de mesure (1), et les sections coudées et les sections s'écartant du tube de mesure (1), des pièces polaires (5) opposées l'une à l'autre, s'étendant parallèlement l'une à l'autre.

2. Débitmètre magnéto-inductif selon la revendication 1, **caractérisé en ce que** les pièces polaires (5) présentent respectivement, à l'extrémité de l'ouverture de la bobine magnétique (4) portant la pièce polaire respective (5) qui se détourne du tube de mesure (1), une section de pièce polaire qui relie l'une à l'autre les sections pénétrant dans l'ouverture de la bobine magnétique (4) et s'étendant jusqu'à l'extrémité de la zone d'ouverture de la bobine magnétique (4) portant la pièce polaire respective (5).

3. Débitmètre magnéto-inductif selon la revendication 1 ou 2, **caractérisé en ce que** la bobine magnétique (4) est réalisée en forme de selle, en particulier épouse exactement la courbure de la pièce polaire (5) disposée en position adjacente au tube de mesure (1).

4. Débitmètre magnéto-inductif selon l'une quelconque des revendications 1 à 3, **caractérisé en ce que** la pièce polaire (5) et la tôle de remise en circulation (3) sont constituées par des matières magnétisables différentes l'une de l'autre.

5. Débitmètre magnéto-inductif selon l'une quelconque des revendications 1 à 4, **caractérisé en ce que** la tôle de remise en circulation (3) entoure la pièce magnétique (2) et le tube de mesure (1) à leur périphérie.
